# EUROPEAN PATENT APPLICATION

(11) **EP 4 446 889 A1**
(43) Date of publication of application: **16.10.2024**
(21) Application number: 22915018.0
(22) Date of filing: 29.12.2022
(51) Int. Cl.: G06F 9/48

(54) **DEVICE DEBUGGING METHOD, DEVICE, AND STORAGE MEDIUM**

(30) Priority: 30.12.2021 CN 202111650812; 30.12.2021 CN 202111656912
(71) Applicant: QKM Technology (Dong Guan) Co., Ltd, Dongguan City, Guangdong Province (CN)
(72) Inventor: ZHU, Yunfeng, Dongguan, Guangdong 523808 (CN); SHI, Jinbo, Dongguan, Guangdong 523808 (CN); YANG, Qinghua, Dongguan, Guangdong 523808 (CN); WANG, Hong, Dongguan, Guangdong 523808 (CN); SHI, Ruizhi, Dongguan, Guangdong 523808 (CN)
(74) Representative: Meyer, Thorsten
(86) International application number: PCT/CN2022/143240
(87) International publication number: WO 2023/125768

(57) **Abstract**

Provided are a device debugging method, device, and storage medium, relating to the field of industrial control, the method comprising: according to a first thread to be created and a breakpoint set, determining that the first thread contains a corresponding breakpoint; injecting a hook function into the first thread, and creating a first thread and executing in a debugging mode; if the hook function is invoked, determining whether a triggering condition of the breakpoint is satisfied; if not, directly exiting the hook function; if so, stopping the code running of the first thread, waiting, and executing a debug instruction. Whether to interrupt is determined by means of arranging the breakpoint set used for debugging on the device such that the functions of device integration debugging and actual operation are implemented, the actual result of each debugging can be observed in real time, and since the hook functions of different threads operate independently and do not interfere, multithread debugging can be achieved, and debugging efficiency is improved.

## Description

### FIELD OF THE INVENTION

The present application relates to, but is not limited to, the field of industrial control technology, in particular to a debugging method for a device, a device, and a storage medium.

### BACKGROUND OF THE INVENTION

In the field of industrial control technology, debugging is often required during machine production due to the complexity of automated industrial equipment. When the industrial equipment enters the formal production environment on-site, the user may control the application programs of the industrial equipment for suspension, resuming or stepping as per the actual requirements. In the case of multi-threaded processing industrial equipment, precise debugging for multiple threads is necessary. Existing debugging often relies on remote control platforms to control the industrial equipment. For example, when debugging a robot using a remote control platform, the debugging personnel cannot obtain real-time information and thus cannot adjust the control parameters of the robot accordingly, which leads to lower efficiency.

Programming control of industrial robots commonly uses simple script language like Lua for users to write code, which is then "embedded" into the program of the robot controller for execution. This simplifies code writing and makes it user-friendly, but it supports single-threaded operations only, but not multi-threaded operations. Consequently, debugging is limited to single-thread operations, making it especially challenging for fine actions requiring coordinated motion among multiple components.

Finally, even after completing code writing, an initial "debugging" process is typically required to identify and resolve logical errors in the code. Furthermore, even after "debugging", when the robot enters the "formal production" environment on-site, the user may need to control the programs (specific threads) for suspension, resuming or stepping as per the actual requirements. The purpose of the present invention is to meet the demand for Lua multi-threaded debugging and control in the above application scenarios.

### SUMMARY OF THE INVENTION

As one aspect, the embodiments of the present application provides a debugging method for a device, and the debugging method includes:
determining whether a first thread to be created contains a corresponding breakpoint based on the first thread and a breakpoint set; if no, creating the first thread and executing in a normal mode; if yes, injecting a hook function into the first thread, and creating the first thread and executing in a debug mode; and
when the hook function in the first thread is called, determining whether a triggering condition of a breakpoint is satisfied; if no, exiting the hook function directly and running on subsequent codes of the first thread; if yes, suspending code running of the first thread, waiting and executing a debug instruction, then exiting the hook function after executing the debug instruction, and running on the subsequent codes of the first thread.

Preferably, the breakpoint set is stored in a breakpoint configuration file, from which breakpoint information is read when creating a thread.

Preferably, breakpoints in the breakpoint set are selected from at least one of three types: location breakpoints representing interruptions occurred at specific locations in the thread during code execution; conditional breakpoints representing interruptions occurred when a variable of interest satisfies a predefined condition during code execution; and location conditional breakpoints representing interruptions occurred at specific locations in the thread and simultaneously when a variable of interest satisfies a predefined condition.

Preferably, said injecting a hook function into the first thread specifically includes adding a hook function after each line of code in the first thread.

Preferably, said determining whether a triggering condition of the breakpoint is satisfied specifically includes:
obtaining an interruption location of each location breakpoint in the breakpoint set, and checking if the interruption location is consistent with a current running code location of the first thread; or
obtaining a variable of interest and a predefined condition for each conditional breakpoint in the breakpoint set, and checking if a current value of the variable of interest satisfies the predefined condition during execution of the first thread; or
obtaining an interruption location, a variable of interest and a predefined condition for each location conditional breakpoint in the breakpoint set, checking if the interruption location is consistent with a current running code location of the first thread, and simultaneously checking if a current value of the variable of interest satisfies the predefined condition during execution of the first thread.

Preferably, said waiting and executing a debug instruction specifically includes:
executing a predefined debug instruction if included in the hook function;
waiting for a debug instruction from a user; and
upon receiving the debug instruction from the user, executing a functional instruction if included in the debug instruction from the user.

Preferably, the debugging method further includes when the debug instruction from the user includes a breakpoint update instruction which is configured to add a new breakpoint to the breakpoint set or remove an existing breakpoint from the breakpoint set, executing the breakpoint update instruction.

Preferably, the debugging method further includes disabling the hook function in the first thread when all breakpoints corresponding to the first thread have been executed or when no breakpoints corresponding to the first thread exist after a breakpoint update.

Preferably, the debugging method further includes when the new breakpoint is added after a breakpoint update, checking if there is a second thread executing in a normal mode related to the new breakpoint; if yes, injecting a hook function into the second thread and executing the second thread in a debug mode.

Preferably, said waiting for a debug instruction from a user specifically includes communicating with the user through a communication thread of an intermediary layer, and storing the debug instruction received from the user in variables within the intermediary layer for sharing the debug instruction with the first thread through an API of the intermediary layer.

Preferably, the hook function is implemented in Lua language or C++ language.

Preferably, the debugging method further includes creating a virtual machine for each first thread to be created, with only one thread running in each virtual machine.

Preferably, the virtual machine and the thread in the virtual machine are created by using C++ language through a Lanes library.

As another aspect, the embodiments of the present application further provide a device including a memory, a processor, and a computer program stored on the memory, wherein the processor executes the computer program to implement the debugging method mentioned above.

As a third aspect, the embodiments of the present application further provide a computer-readable storage medium, on which computer program commands are stored, wherein the computer program instructions are executed by a processor to implement the debugging method mentioned above.

The embodiments of the present invention have at least one of the following beneficial effects. When creating a new thread, it's determined whether to inject a hook function based on the breakpoint set, thus the hook functions for each thread can independently run and control whether to trigger the breakpoints in the injected thread so as to interrupt the execution. In such a way, debugging in multi-threaded environments is achieved. Furthermore, the breakpoint data is stored separately in a breakpoint configuration file rather than hardcoded in the code of each thread, and the breakpoints is checked by the hook function of each thread, which enables flexible addition and removal of breakpoints, thereby synchronizing updates on the breakpoints in the multiple threads. In the present invention, corresponding debug instructions are generated based on the multi-threaded debugging data, and then are sent to the device. After receiving debugging results from the device based on the debug instructions, the debugging results are displayed. In such a way, communication among users, compilers, and devices under multiple threads can be achieved, which enables the debugging and ensures the debugging progress of the device such as the robot based on the debug instructions, and finally improves the execution efficiency of the threads.

Other features and advantages of the present invention will be explained in the specification hereinafter and will become apparent in part from the specification or learned by implementing the present invention. The purpose and other advantages of the present invention can be achieved and obtained by the specific structure indicated in the specification, the claims, and the drawings.

### BRIEF DESCRIPTION OF THE DRAWINGS

The following is a brief introduction of the drawings used in the embodiments of the present application, in order to more clearly explain the technical solution in the embodiments of the present application. Obviously, the drawings described below only show some embodiments of the present application. For persons ordinarily skilled in the art, other drawings may also be obtained based on these drawings without any creative work.
FIG. 1 is a module schematic diagram of a device according to an embodiment of the present application.
FIG. 2 is a flowchart illustrating a debugging method for a device according to an embodiment of the present application.
FIG. 3 is a structural schematic diagram of the thread creation system according to an embodiment of the present application.

### DETAILED DESCRIPTION OF ILLUSTRATED EMBODIMENTS

In order to make the purpose, technical solution and advantages of the embodiments of the present application more clear, the technical solution in the embodiments of the present application will be clearly and completely described in combination with the drawings attached to the embodiments of the present application. It should be understood that the specific embodiments described herein are not intended to limit the scope of the present application, but only to interpret the present application.

It should be noted that although the functional modules are divided in the device diagram and the logical sequence is shown in the flowchart, in some cases the steps shown or described can be performed in a different order than the modules in the device or in the flowchart. The terms "first", "second", etc. in the specification, claims and drawings above are only used to distinguish similar objects and are not necessarily used to describe a particular order or sequence.

In the field of industrial control technology, debugging is often required during machine production due to the complexity of automated industrial equipment. When the industrial equipment enters the formal production environment on-site, the user may control the application programs of the industrial equipment for suspension, resuming or stepping as per the actual requirements. In the case of multi-threaded processing industrial equipment, precise debugging for multiple threads is necessary. Existing debugging method often relies on remote control platforms to control the industrial equipment. For example, when debugging a robot using a remote control platform, the debugging personnel cannot obtain real-time information and thus the control parameters of the robot accordingly, which leads to low debugging efficiency. For this reason, the embodiments of the present application provide a debugging method for a device, a device, and a storage medium for improving the debugging efficiency.

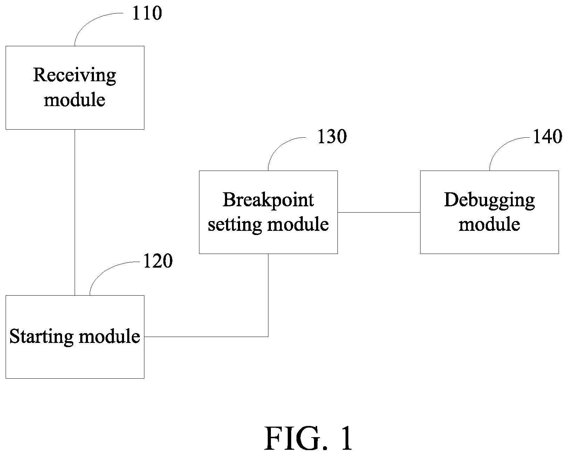

Referring to the embodiment shown in FIG. 1, the device includes a receiving module 110, a starting module 120, a breakpoint setting module 130, and a debugging module 140. The receiving module 110 is configured to receive a debugging start request. The starting module 120 is configured to start the execution of a first thread in a normal mode or a debug mode based on the debugging startup request and a breakpoint set. The breakpoint setting module 130 is configured to determine whether the first thread to be created contains a corresponding breakpoint based on the first thread and the breakpoint set, and if yes, a hook function is injected into the first thread. The debugging module 140 is configured to respond to a debug instruction when the hook function in the first thread is called.

It should be noted that the hook function is injected through a script function. The device may include multiple first threads for executing operational commands of the device.

For each device, the user may inject the hook function into at least one first thread as needed.

It should be noted that, the device may be a machine tool or a robot used to perform industrial control tasks. Hence, it's necessary for the debugging personnel to adjust the control parameters based on specific operation results observed in real time.

It should be noted that, in the application development process of controlling the devices like robots, Lua multi-threaded debugging interaction for users is required for meeting the application demands of multitasking parallel operation and debugging (e.g., simultaneous operations of robot movements, PLC control, visual processing of industrial cameras, etc.). In the embodiments of the present invention, the method includes obtaining code data input by users, generating multi-threaded debugging data based on the code data, generating corresponding debug instructions based on the multi-threaded debugging data, then sending the debug instructions to the device, and then receiving debugging results from the device based on the debug instructions, and finally displaying the debugging results, thereby achieving communication among users, compilers, and devices under multiple threads, and enabling the debugging and ensuring the debugging progress of the device such as the robot based on the debug instructions, and finally improving the execution efficiency of the threads.

Those ordinarily skilled in the art will understand that the module schematic diagram shown in FIG. 1 does not limit the embodiments described herein and may include more or fewer modules than depicted, combine certain modules, or arrange different modules.

Further details of the method according to the embodiment of the present application will be explained with reference to the accompanying drawings.

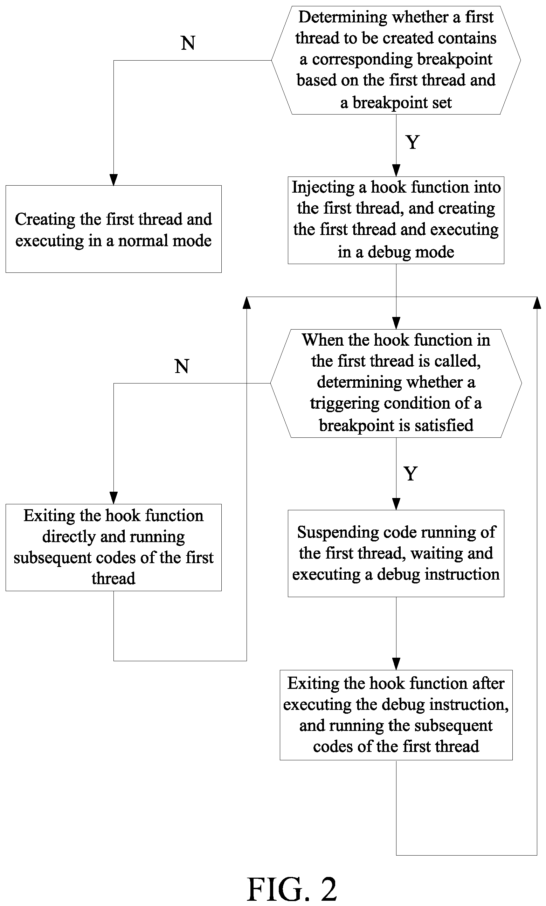

Referring to FIG. 2, the embodiments of the present application further provides a debugging method for a device, including determining whether a first thread to be created contains a corresponding breakpoint based on the first thread and a breakpoint set; if no, creating the first thread and executing in a normal mode; if yes, injecting a hook function into the first thread, and creating the first thread and executing in a debug mode.

It should be noted that the breakpoint set is predefined and stored in a breakpoint configuration file, from which breakpoint information is read when creating a thread.

Breakpoints in the breakpoint set are selected from at least one of three types: location breakpoints representing interruptions occurred specific locations in the thread during code execution (for example, a breakpoint is set at line 5 of code, indicating that an interruption is triggered when the execution of the first thread reaches line 5 of code); conditional breakpoints representing interruptions occurred when a variable of interest satisfies a predefined condition during code execution; and location conditional breakpoints representing interruptions occurred at specific locations in the thread and meanwhile when a variable of interest satisfies a predefined condition.

It should be noted that, the breakpoint set is shared among all first threads of the device to be debugged. Thus, the interrupt may be triggered when the same function is executed by multiple first threads, thereby enabling terminal debugging for multiple first threads. As an optional embodiment, the breakpoints may be specified to apply to one or more certain threads, not every thread.

It should be noted that one or more breakpoints may be set for the first thread to monitor at least one function of the first thread.

It should be noted that, the step of injecting the hook function into the first thread specifically includes adding a hook function after each line of statement in the first thread. In such a way, the hook function may be called once when each line of statement is executed in the first thread, so as to determine which line of statement is executed currently, whether it satisfies a triggering condition for the location breakpoints, and whether there are variable changes for the conditional breakpoints to satisfy the triggering condition.

When the hook function in the first thread is called, the method further includes determining whether the triggering condition of the breakpoint is satisfied; if no, exiting the hook function directly and running on subsequent codes of the first thread; if yes, suspending the code running of the first thread, waiting and executing a debug instruction, then exiting the hook function after executing the debug instruction, and running on the subsequent codes of the first thread.

It should be noted that, in order to ensure the efficiency of debugging program execution, the hook function will first check whether an interrupt triggering condition is satisfied. If the interrupt triggering condition is not satisfied, the hook function will exit quickly to minimize the impact on the efficiency of program execution. If the interrupt triggering condition is satisfied, the running of the first thread is suspended, and the debug instruction is executed.

Therefore, the device is integrated with both functionalities of debugging and actual execution due to the breakpoint set for debugging configured on the device. Consequently, it's easy to observe real-time results of each debugging action during debugging, which is beneficial to the debugging operation. Further, the hook function is injected into the multiple first threads for determining any breakpoints, therefore multi-threaded debugging can be achieved, thereby enhancing the debugging efficiency.

Understandably, the step of determining whether a triggering condition of the breakpoint is satisfied specifically includes determining several breakpoints corresponding to the first thread based on the breakpoint set; comparing the breakpoints corresponding to the first thread in the breakpoint set with the current running state of the first thread, upon the hook function is called, namely comparing the location (e.g. line number) of each location breakpoint with the current running code location (e.g. line number), and comparing the logical expressions of variables of each conditional breakpoint with the current variable values. In such a way, the triggering condition may be determined. Since a hook function is executed after each statement, it is foreseeable that an interrupt execution will be triggered when hitting each predefined breakpoint, thereby entering the debug instruction processing state.

The step of waiting and executing a debug instruction specifically includes executing a predefined debug instruction if included in the hook function. Meanwhile the device is configured to wait for and receive a debug instruction from a user. The debug instruction includes a functional instruction or a breakpoint update instruction. Specifically, the functional instruction is used for the device to perform certain actions, such as stepping, suspension, resuming, reading/writing values, and feedback on status, among others. The breakpoint update instruction is used to add a new breakpoint to the breakpoint set or remove an existing breakpoint from the breakpoint set. After receiving the debug instruction from the user, the device performs the corresponding debugging function. Once completed, the hook function exits, allowing the first thread to continue its execution.

When all breakpoints corresponding to the first thread have been executed or no breakpoints corresponding to the first thread exist after the breakpoint update, the hook function in the first thread is disabled, thereby improving the efficiency of the debugging program.

If a new breakpoint is added after a breakpoint update, the method further includes checking if there is a second thread executing in a normal mode related to the new breakpoint; if yes, injecting a hook function into the second thread and executing the second thread in a debug mode.

Understandably, for example, if a conditional breakpoint applicable to all threads is added, an interruption may occur in all currently running threads including those running in normal mode, due to conditions of variables being satisfied. In such cases, it's necessary not only to update the breakpoints on the threads where hook functions have been injected, but also to inject hook functions into the second thread running in normal mode so as to start in debug mode.

Understandably, the breakpoint update instruction is called via an API (Application Programming Interface) of the program, thereby adding new breakpoints for the first thread or other second threads during runtime for debugging.

As an optional embodiment, after the conditional breakpoint is injected into node information of the first thread, the hook function actively obtains the conditional breakpoint from the node information of the first thread, so that the hook function is suspended based on the conditional breakpoint.

Understandably, the method further includes obtaining the variable and the logic for determining the conditional breakpoint. If the value of the variable executed by the first thread matches the logic, the execution of the first thread is interrupted and a predefined debug instruction is executed, which includes one of the predefined debug instruction in the hook function and the debug instruction sent by the user.

It should be noted that after the hook function is determined to be effective, the debug instruction will be sent by the user to achieve better debugging.

It should be noted that the debug instruction may be a library function in the debug library to which the hook function is applied. If the hook function is implemented by Lua, the function of the debug instruction may be a debug instruction (Debug) in Lua or a function obtained by the combination of multiple debug instructions.

It should be noted that the call of the hook function is not affected by the updates on the script file, since the hook function is implemented in the application program. In such cases, the device may create a communication thread to call the script file to update the breakpoint set.

As an optional embodiment, during the wait for the debug instruction for the user, the hook function does not directly communicate with the user. Instead, a communication thread of an intermediary layer communicates with the user. When the communication thread receives the debug instruction from the user, the debug instruction is stored in variables within the intermediary layer for sharing the debug instruction with the relevant virtual machine through an API of the intermediary layer. Once the environment changes within the virtual machine where the first thread is located, the hook function can retrieve an updated user instruction based on a locally modified variable, which might include instructions for stepping through code or updating the breakpoints.

It should be noted that debugging of newly added breakpoints can be achieved by either restarting the thread or directly adding them dynamically to the corresponding second thread.

It should be noted that, when the breakpoints in the breakpoint set are removed, it is synchronized to check whether all breakpoints, including location breakpoints and conditional breakpoints, in the corresponding first thread have been removed. If yes, the hook function of the first thread is disabled, thereby reducing the number of the triggered threads and consequently lowering thread consumption to enhance the execution efficiency.

Understandably, the method further includes creating thread node information for each first thread, which is configured to manage thread data and conditional breakpoint data. By combining with the thread node information, a task thread list is obtained.

The method further includes storing the conditional breakpoints and the location breakpoints separately, which facilitates better debugging of each first thread.

Understandably, the hook function is implemented in Lua language. However, in such a case, Lua cannot respond to external instructions or promptly multiple debug instructions during the debug execution. As another optional embodiment, the hook function is implemented in C++ language. In such a case, the efficiency is high, and meanwhile the internal system interactions are convenient because the host is also in C++ language. For example, the hook function implemented in C++ language can directly access the variables created in C++ language and used in the script execution. While Lua would require additional C++ interfaces. Additionally, for Lua language, it's required to modify the state machine in the hook function, for example, change the state to "stop" when hits a breakpoint. The state machine is maintained in C++ language and can be directly modified there.

It should be noted that, the hook function set by Lua language is embedded in programming languages, which can enhance the development efficiency of the hook function. Lua also offers a debug library which includes debug instructions that can be called directly, thereby further improving the efficiency.

Understandably, the method further includes creating a main thread. The main thread is configured to create the first threads through a Lanes library and set a corresponding hook function for the first threads.

It should be noted that, the creation of the first threads by using the Lanes library essentially includes creating a virtual machine for each first thread, with each virtual machine existing in an independent OS Thread (Operating System Thread). Due to this independence, each virtual machine can run the hook function (Hook) independently, thereby ensuring separate control over each first thread.

Understandably, the method further includes creating a main hook function for the main thread to monitor the lifecycle of the main thread, so as to clear a thread list upon the lifecycle completion of the main thread.

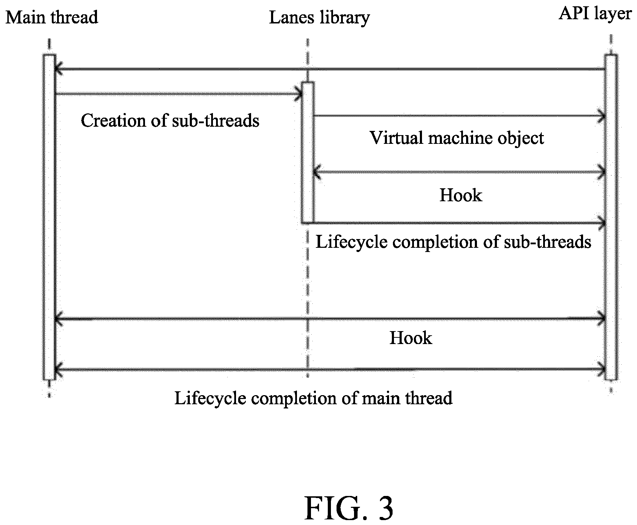

For example, referring to the schematic diagram of thread creation system as shown in FIG. 3, the main thread is created through the API layer. At this time, the main thread creates virtual machine objects for each sub-thread (that is, the first thread) through the Lanes library, and the API layer (application layer) creates thread node information in each virtual machine object. Further, the thread node information is added to the task thread list, and the hook function is added to each sub-thread. Once the sub-thread completes the lifecycle, the hook function of the main thread is triggered. Until all sub-threads end, the lifecycle of the main thread is completed, and the thread list is cleared.

It should be noted that, the breakpoint set may be managed by setting breakpoint files and loaded or updated by loading the breakpoint files through Lua scripts.

It should be noted that in some embodiments, receiving a debugging start request is represented as a response to the loading of the Lua scripts. When the breakpoint set and conditional breakpoints are all cleared, the device enters normal execution mode. It should be noted that the debugging for some devices might require a dedicated button or command for activation.

It should be noted that, multiple Lua scripts may be set. Different Lua scripts may be separately loaded, or multiple Lua scripts may be simultaneously loaded to debug the device.

A specific optional embodiment is described as follows. A device to be debugged in this embodiment is based on QRL (QKM Robot Language), a Lua-based language. Upon receiving a debugging start request, the device creates a new thread, which includes firstly checking the breakpoint set and determining whether the new thread includes a corresponding breakpoint, if no, running the thread in normal mode, if yes, running the thread in debug mode. The method further includes adding (injecting) a hook function after each line of Lua statement, and checking whether the line of Lua statement matches a location of the location breakpoint or satisfies a triggering condition of the conditional breakpoint. It's known that some breakpoints are related to some specific threads, while some breakpoints are related to all threads. If there is no breakpoint in the current thread, or the breakpoint does not meet the triggering condition, the hook function exits, so that the device can run the next line of statement and enter a subsequent hook function. The breakpoints located at the specific lines of statement are pre-stored in a breakpoint list. The breakpoints in the breakpoint list generally include three types including location breakpoints, conditional breakpoints, and location conditional breakpoints. For example, the location breakpoints respectively configured at lines 5, 8, and 15 of code mean that an interruption is respectively triggered when the code execution of the current thread reach to the lines 5, 8, and 15 of code. The conditional breakpoints are unrelated to the locations (e.g. lines of code), instead mean that an interruption is triggered when a variable of interest satisfies a predefined condition. For example, the interruption is triggered when the variable of interest generally using a variable name and a logical expression is larger than a certain value. The location conditional breakpoints mean that an interruption run occurs when both the location of the code currently executed and the variable of interest meet the conditions. Such a breakpoint list may be pre-stored in a breakpoint configuration file and loaded by the hook function for runtime checks. After checking the breakpoint list, it's determined whether an interruption is necessary for the current line of Lua statement. Likewise, the conditional breakpoints use the similar manner. A list of the conditional breakpoints is pre-stored in a breakpoint configuration file and loaded by the hook function for runtime checks. After checking all location breakpoints and all conditional breakpoints, it's determined whether an interruption is necessary for the current statement. If no interruption is necessary, it's returned directly. For example, after line 5 of statement is executed, the hook function that follows the statement is then executed. Specifically, the hook function checks the breakpoint list to determine an interruption required at this line of statement. At this time, the hook function will interrupt the execution, wait for and execute the debug instruction to perform certain actions, such as stepping, suspension, reset, variable inspection, and feedback on status, among others. In such a case, the breakpoint list may be updated by adding or removing breakpoints. When the debug instruction is completed, the hook function returns, and the device continues to execute the next Lua statement.

Since multithread is not supported in Lua language, the Lanes library is used to implement multiple threads. This allows Lua scripts to run in virtual machines, with each virtual machine restricted to executing only one Lua thread. When QRL initiates multiple threads, it essentially creates a corresponding virtual machine for each sub-thread, with each virtual machine operating within its own OS Thread (operating system thread). This independence enables each virtual machine to independently run Hook without interference, thus achieving independent control over the sub-threads. The breakpoints for different threads can be set in the same breakpoint configuration file. Consequently, when different threads reach conditions that satisfy the same breakpoint, interrupts will occur to carry out a debug. For example, if thread A and thread B are started sequentially to control the movements of robot arms A and B, and a conditional breakpoint (spd > 5) is preconfigured, then the hook function will be injected into both thread A and thread B. Whenever the hook function detects that the value of the variable spd exceeds 5, an interruption will be triggered in the respective thread, thereby allowing the debug instruction to be received and executed.

Understandably, the present application further provides a device including a memory, a processor, and a computer program stored in the memory and executable on the processor. The processor, when executing the computer program, performs the debugging method mentioned above.

It should be noted that the device described in the present embodiment can be applied similarly to that shown in the embodiment of FIG. 1. Within the same contemplation of the invention, the device in the present embodiment and the debugging method depicted in FIG. 2 share the same conceptual framework and technical effects; therefore, detailed explanation is omitted here.

As another aspect, the present application further provides a computer-readable storage medium, on which computer program commands are stored, wherein the computer program commands are executed to implement the debugging method mentioned above.

The software programs and commands necessary for implementing information processing methods in the aforementioned embodiments are stored in memory. When executed by a processor, the information processing methods described above, such as the steps in FIG. 2, are performed.

Understandably, the present application further provides a computer-readable storage medium, on which computer program commands are stored, wherein the computer program commands are executed to implement the debugging method mentioned above.

Persons skilled in the art can understand that the whole or partial steps of implementing the above embodiments can be accomplished through hardware related to program commands. The programs can be stored on a computer-readable storage medium and when executed, performs the steps described in the embodiments. The computer-readable storage medium can be any medium or data storage device accessible by a computer, including but not limited to various mediums capable of storing program codes, such as mobile storage devices, random access memory (RAM), magnetic storage (e.g., floppy disks, hard disks, magnetic tapes, magneto-optical disks (MO)), optical storage (e.g., CD, DVD, BD, HVD), and semiconductor memory (e.g., ROM, EPROM, EEPROM, NAND FLASH, SSD) etc..

Alternatively, if the functions are implemented in the form of software functional modules and for sale or use as independent products, they can be stored in a computer readable storage medium. Based on this, the technical solutions of the present application essentially or part of the present application contributing to the prior arts or part of the technical solutions can be embodied in the form of software products. The computer software products are stored in a storage medium and includes a number of commands for enabling a computer device (such as personal computer, server and network device) to execute all or part of the methods described in the embodiments.

The above embodiments are provided for a detailed description of the technical solution of the present application, but the description of these embodiments is only for facilitating understanding of the methods disclosed herein and should not be construed as limitations on the embodiments of the present application. Variations or replacements readily apparent to those skilled in the art in this technical field should be encompassed within the protection scope of the present application.

## Claims

1. A debugging method for a device, comprising:
determining whether a first thread to be created contains a corresponding breakpoint based on the first thread and a breakpoint set; if no, creating the first thread and executing in a normal mode; if yes, injecting a hook function into the first thread, and creating the first thread and executing in a debug mode;
when the hook function in the first thread is called, determining whether a triggering condition of a breakpoint is satisfied; if no, exiting the hook function directly and running subsequent codes of the first thread; if yes, suspending code running of the first thread, waiting and executing a debug instruction, then exiting the hook function after executing the debug instruction, and running the subsequent codes of the first thread.

2. The debugging method according to claim 1, wherein the breakpoint set is stored in a breakpoint configuration file, from which breakpoint information is read when creating a thread.

3. The debugging method according to claim 2, wherein breakpoints in the breakpoint set are selected from at least one of three types: location breakpoints representing interruptions occurred at specific locations in the thread during code execution; conditional breakpoints representing interruptions occurred when a variable of interest satisfies a predefined condition during code execution; and location conditional breakpoints representing interruptions occurred at specific locations in the thread and simultaneously when a variable of interest satisfies a predefined condition.

4. The debugging method according to claim 1, wherein said injecting a hook function into the first thread specifically comprises adding a hook function after each line of code in the first thread.

5. The debugging method according to claim 4, wherein said determining whether a triggering condition of the breakpoint is satisfied specifically comprises:
obtaining an interruption location of each location breakpoint in the breakpoint set, and checking if the interruption location is consistent with a current running code location of the first thread; or
obtaining a variable of interest and a predefined condition for each conditional breakpoint in the breakpoint set, and checking if a current value of the variable of interest satisfies the predefined condition during execution of the first thread; or
obtaining an interruption location, a variable of interest and a predefined condition for each location conditional breakpoint in the breakpoint set, checking if the interruption location is consistent with a current running code location of the first thread, and simultaneously checking if a current value of the variable of interest satisfies the predefined condition during execution of the first thread.

6. The debugging method according to claim 5, wherein said waiting and executing a debug instruction specifically comprises:
executing a predefined debug instruction if included in the hook function;
waiting for a debug instruction from a user; and
upon receiving the debug instruction from the user, executing a functional instruction if included in the debug instruction from the user.

7. The debugging method according to claim 6, further comprising when the debug instruction from the user comprises a breakpoint update instruction which is configured to add a new breakpoint to the breakpoint set or remove an existing breakpoint from the breakpoint set, executing the breakpoint update instruction.

8. The debugging method according to claim 7, further comprising disabling the hook function in the first thread when all breakpoints corresponding to the first thread have been executed or when no breakpoints corresponding to the first thread exist after a breakpoint update.

9. The debugging method according to claim 7, further comprising when the new breakpoint is added after a breakpoint update, checking if there is a second thread executing in a normal mode related to the new breakpoint; if yes, injecting a hook function into the second thread and executing the second thread in a debug mode.

10. The debugging method according to claim 6, wherein said waiting for a debug instruction from a user specifically comprises:
communicating with the user through a communication thread of an intermediary layer, and storing the debug instruction received from the user in variables within the intermediary layer for sharing the debug instruction with the first thread through an API of the intermediary layer.

11. The debugging method according to claim 1, wherein the hook function is implemented in Lua language or C++ language.

12. The debugging method according to claim 1, further comprising creating a virtual machine for each first thread to be created, with only one thread running in each virtual machine.

13. The debugging method according to claim 12, wherein the virtual machine and the thread in the virtual machine are created by using C++ language through a Lanes library.

14. A device, comprising:
a memory,
a processor, and
a computer program stored in the memory and executable on the processor, wherein the processor, when executing the computer program, performs the debugging method according to any of claims 1 to 13.

15. A computer-readable storage medium, on which computer program commands are stored, wherein the computer program commands are executed by a processor to implement the debugging method according to any of claims 1 to 13.
